# EUROPEAN PATENT SPECIFICATION

(11) **EP 4 328 047 B1**
(45) Date of publication and mention of the grant of the patent: **11.11.2026**
(21) Application number: 23190755.1
(22) Date of filing: 10.08.2023
(51) Int. Cl.: B60C 5/00, B60B 21/12

(54) **TIRE-RIM ASSEMBLY**
REIFEN-FELGE-ANORDNUNG
ENSEMBLE PNEU-JANTE

(30) Priority: 25.08.2022 JP 2022134360
(43) Date of publication of application: 28.02.2024
(73) Proprietor: Sumitomo Rubber Industries, Ltd., Kobe-shi, Hyogo 651-0072 (JP)
(72) Inventor: SATO, Takuya, Kobe-shi, 651-0072 (JP); MATSUNAMI, Sho, Kobe-shi, 651-0072 (JP); YUKAWA, Naoki, Kobe-shi, 651-0072 (JP)
(74) Representative: Manitz Finsterwald Patent- und Rechtsanwaltspartnerschaft mbB

(56) References cited:
- EP-A1- 1 876 038
- EP-A1- 2 239 152
- EP-A2- 1 253 025
- EP-A2- 1 574 360

## Description

### BACKGROUND OF THE INVENTION

### Field of the Invention

The present invention relates to a tire-rim assembly.

### Background Art

Japanese Patent No. 4312114 describes a noise reducer for a tire. The noise reducer is mounted in a tire inner cavity formed by a rim and a pneumatic tire mounted on the rim and includes an annular base member having an inner circumferential surface that circularly extends in a tire circumferential direction while being in contact with an inner cavity surface of the rim.

In recent years, further enhancement regarding road noise from tires has been required in association with improvement in silent performances of vehicles.

The present invention has been made in view of the above circumstances, and a main object of the present invention is to provide a tire-rim assembly having an improved durability and capable of further decreasing road noise.

A tire-rim assembly in accordance with the preamble of claim 1 is known from EP 1 253 025 A2. Related tire-rim assemblies are disclosed in EP 1 574 360 A2, EP 1 876 038 A1 and EP 2 239 152 A1.

### SUMMARY OF THE INVENTION

The object is solved by a tire-rim assembly having the features of claim 1. Subclaims are directed at specific embodiments of the invention.

The present invention is directed to a tire-rim assembly including: a rim; a pneumatic tire mounted on the rim; and an annular sound absorbing member disposed in a tire inner cavity enclosed by the rim and the pneumatic tire, wherein the rim includes an annular well recessed inward in a tire radial direction, the well has an outer circumferential surface, in the tire radial direction, that includes a bottom surface extending to be substantially parallel to a tire axial direction, the sound absorbing member includes a sponge material, at least a part of the sound absorbing member is mounted on the bottom surface of the well, and a maximum width in the tire axial direction of the sound absorbing member is not smaller than 0.7 times a maximum width in the tire axial direction of the bottom surface. The sound absorbing member is an annular member obtained by curving a rod-like member, which has a pair of end portions, into an annular shape and connecting the pair of end portions to each other. The rod-like member in a state of having not been curved has: an inner surface that extends in a longitudinal direction and that is to be brought into contact with the bottom surface; an outer surface that extends in the longitudinal direction and that is present on an opposite side to the inner surface; and tilted end surfaces each intersecting with the outer surface at an acute angle.

The tire-rim assembly according to the present invention has an improved durability and can further decrease road noise by employment of the above configuration.

According to an embodiment of the invention, the maximum width of the sound absorbing member is not larger than a width that is larger out of a width obtained by subtracting 60 mm from a maximum width in the tire axial direction of the rim and the maximum width of the bottom surface.

According to an embodiment of the invention, in a state where the sound absorbing member has been detached from the bottom surface and is free, an inner circumferential length of the sound absorbing member is 0.8 to 1.2 times an outer circumferential length of the bottom surface.

According to an embodiment of the invention, the sound absorbing member is adhered to neither the pneumatic tire nor the rim.

According to an embodiment of the invention, in a cross section of the tire-rim assembly, a cross-sectional area of the sound absorbing member is 5% to 25% of a cross-sectional area of the tire inner cavity.

According to an embodiment of the invention, the sound absorbing member has an elongation of 100% to 600%, wherein the elongation is measured according to "Part 5: Determination of tensile strength, elongation at break and tear strength" in JIS K 6400-5:2012.

According to an embodiment of the invention, the sound absorbing member has a tensile strength of 50 to 300 kPa, wherein the tensile strength is measured according to "Part 5: Determination of tensile strength, elongation at break and tear strength" in JIS K 6400-5:2012.

According to an embodiment of the invention, the sound absorbing member has a density of 10 to 40 kg/m³.

According to an embodiment of the invention, the pair of end portions are connected to each other by using at least one of an adhesive, a pressure-sensitive adhesive, and a double-sided tape.

According to an embodiment of the invention, a difference d between a length in the longitudinal direction of the outer surface and a length in the longitudinal direction of the inner surface satisfies the following expression,$d = 2 \times p \times t$ where t represents a thickness between the outer surface and the inner surface of the rod-like member.

### BRIEF DESCRIPTION OF THE DRAWINGS

FIG. 1 is a cross-sectional view of a tire-rim assembly according to an embodiment;
FIG. 2 is an enlarged view of the tire-rim assembly in FIG. 1;
FIG. 3 is a cross-sectional view at A-A in FIG. 1;
FIG. 4(a) is a perspective view showing a rod-like member according to a not-claimed embodiment;
FIG. 4(b) is a side view showing a sound absorbing member in the form of an annular member obtained by curving the rod-like member in FIG. 4(a);
FIG. 5 is a cross-sectional view for explaining a method for mounting the sound absorbing member;
FIG. 6 is a cross-sectional view of a tire-rim assembly according to another embodiment of the present invention;
FIG. 7 is a cross-sectional view of a tire-rim assembly according to still another embodiment of the present invention;
FIG. 8(a) is a perspective view showing a rod-like member in another embodiment of the present invention; and
FIG. 8(b) is a side view showing a sound absorbing member in the form of an annular member obtained by curving the rod-like member in FIG. 8(a).

### DETAILED DESCRIPTION

Hereinafter, embodiments of the present invention will be described with reference to the drawings. It should be understood that the drawings contain exaggerated expressions and expressions that differ from the dimensional ratio of the actual structure in order to help the understanding of the content of the present invention. In addition, the same or common elements are denoted by the same reference characters throughout each embodiment, and redundant descriptions thereof are omitted. Furthermore, the specific configurations shown in the embodiments and the drawings are for understanding the content of the present invention, and the present invention is not limited to the specific configurations shown.

### [Tire-Rim Assembly (First Embodiment)]

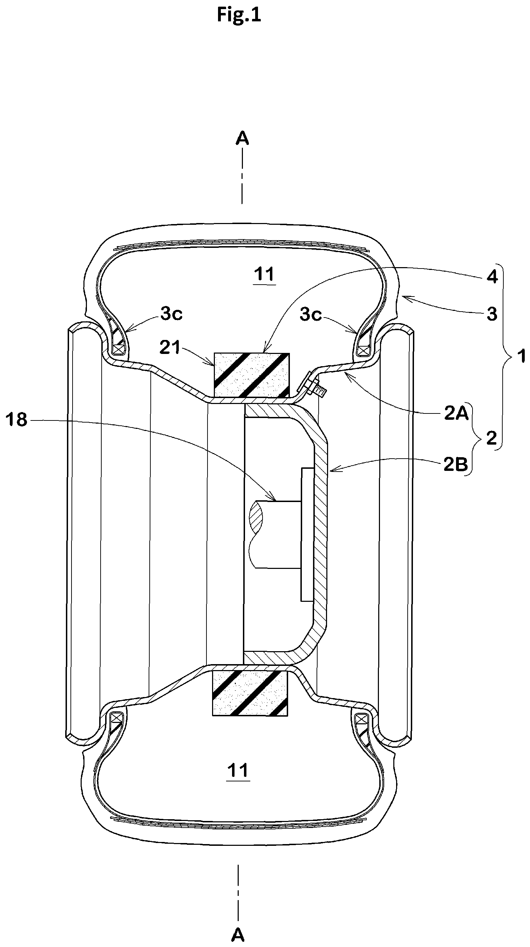

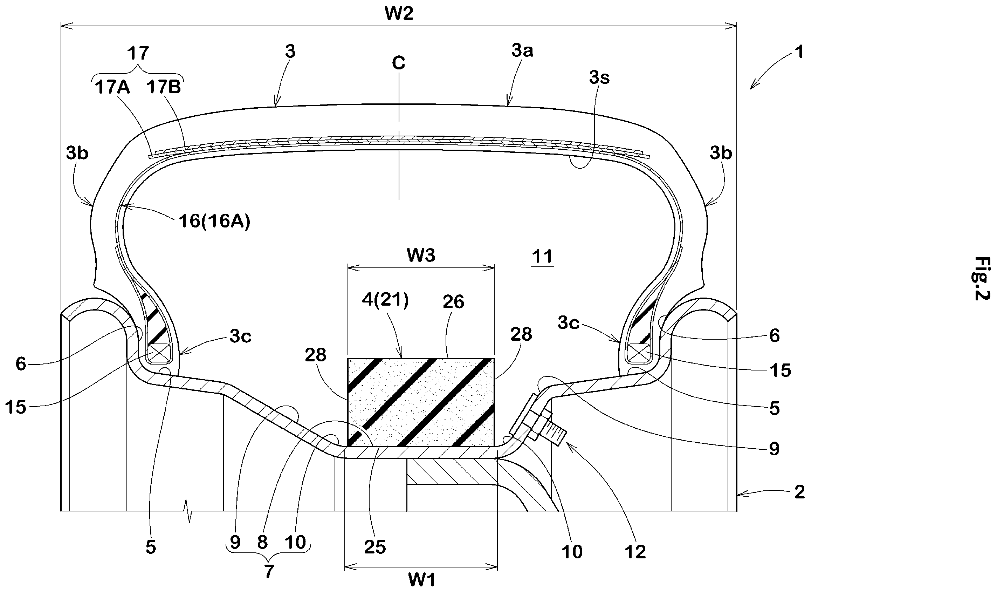

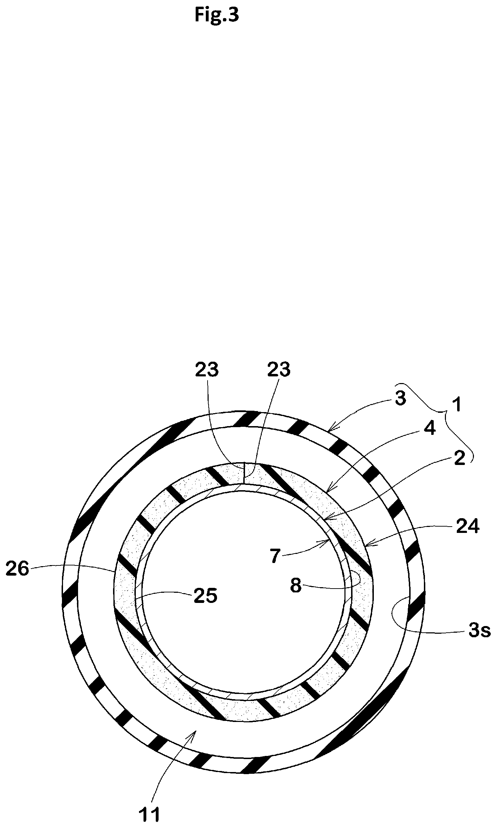

FIG. 1 is a cross-sectional view of a tire-rim assembly (hereinafter, sometimes simply referred to as "assembly") 1 according to the present embodiment. FIG. 2 is an enlarged view of the tire-rim assembly 1 in FIG. 1. FIG. 3 is a cross-sectional view at A-A in FIG. 1.

The assembly 1 according to the present embodiment includes a rim 2, a pneumatic tire (hereinafter, sometimes simply referred to as "tire") 3, and a sound absorbing member 4. Although an assembly 1 including a tire 3 for a passenger car is presented as an example in the present embodiment, no limitation to this mode is made. For example, the assembly 1 may be an assembly (not shown) including a tire such as a tire for a motorcycle or a heavy duty tire.

In the present description, dimensions and the like of constituents such as the tire 3 are values measured in a state (standardized state) where the tire 3 is mounted on a standardized rim (rim 2) and inflated to a standardized internal pressure and where no load is applied, unless otherwise noted. An ordinary dimensional error (tolerance) that is unavoidable in manufacturing is allowed to be set for each of the dimensions and the like.

The "standardized rim" refers to a rim that is defined, in a standard system including a standard on which the tire 3 is based, by the standard for each tire. Therefore, the standardized rim is, for example, the "standard rim" in the JATMA standard, the "Design Rim" in the TRA standard, or the "Measuring Rim" in the ETRTO standard.

The "standardized internal pressure" refers to an air pressure that is defined, in a standard system including a standard on which the tire 3 is based, by the standard for each tire. Therefore, the standardized internal pressure is, for example, the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

### [Rim]

The rim 2 in the present embodiment is a conventional wheel rim made of a metal, and the above standardized rim is suitably used. The rim 2 includes a rim body 2A and a disc portion 2B.

The rim body 2A is for mounting thereon bead portions 3c of the tire 3. As shown in FIG. 2, the rim body 2A in the present embodiment includes a pair of rim sheets 5, a pair of rim flanges 6, and a well 7.

The pair of rim sheets 5 are for receiving (seating) thereon the bottom surfaces on the inner side in a tire radial direction of the respective bead portions 3c. The pair of rim flanges 6 extend outward in the tire radial direction so as to be contiguous with the outer ends in a tire axial direction of the respective rim sheets 5. These rim flanges 6 make it possible to support the outer surfaces in the tire axial direction of the respective bead portions 3c.

The well 7 is formed in an annular shape between the pair of rim sheets 5 so as to be recessed inward in the tire radial direction. The well 7 in the present embodiment has an outer circumferential surface, in the tire radial direction, that includes a bottom surface 8 and a pair of side surfaces 9.

The bottom surface 8 in the present embodiment extends to be substantially parallel to the tire axial direction. Here, the phrase "extends to be substantially parallel to the tire axial direction" is used in consideration of the above tolerance. In the present embodiment, it is interpreted that the bottom surface 8 extends to be substantially parallel to the tire axial direction if the angle formed by the tire axial direction and the bottom surface 8 is within a range of ±3°.

A maximum width W1 in the tire axial direction of the bottom surface 8 is set as appropriate according to the size of the rim 2. The maximum width W1 in the present embodiment is set to be 10% to 30% of a maximum width W2 in the tire axial direction of the rim 2. In the present embodiment, the maximum width W2 of the rim 2 is defined as the maximum width (the maximum width of the entire rim 2) in the tire axial direction between the pair of rim flanges 6.

Each of the pair of side surfaces 9 makes connection between the corresponding one of both ends in the tire axial direction of the bottom surface 8 and the corresponding one of the pair of rim sheets 5, and extends to be tilted from the tire axial direction. The pair of side surfaces 9 in the present embodiment are connected to both respective ends of the bottom surface 8 via respective arc-shaped surfaces 10.

The angle (not shown) of each of the pair of side surfaces 9 relative to the tire axial direction is set to, for example, 45 to 70°. One side surface 9 out of the pair of side surfaces 9 is provided with an air valve 12 for filling a tire inner cavity 11 with air.

As shown in FIG. 1, the disc portion 2B is for holding the rim body 2A. An axle 18 is fixed to the disc portion 2B.

### [Pneumatic Tire]

The tire 3 is mounted on the rim 2. As shown in FIG. 2, the tire 3 in the present embodiment includes: a carcass 16 extending from a tread portion 3a through sidewall portions 3b to bead cores 15 of the bead portions 3c; and a belt layer 17 disposed outward, in the tire radial direction, of the carcass 16.

The carcass 16 includes at least one carcass ply (in the present example, one carcass ply 16A). The carcass ply 16A has, for example, carcass cords (not shown) each arranged at an angle of 80 to 90 degrees relative to a tire equator C.

The belt layer 17 is disposed outward, in the tire radial direction, of the carcass 16 so as to be located inside the tread portion 3a. The belt layer 17 includes at least one belt ply (in the present example, two belt plies 17A and 17B). The belt plies 17A and 17B have, for example, belt cords (not shown) that are each arranged at an angle of 10 to 35 degrees relative to a tire circumferential direction and that are superposed in mutually intersecting directions.

### [Sound Absorbing Member]

The sound absorbing member 4 is disposed in the tire inner cavity 11 enclosed by the rim 2 and the tire 3. The sound absorbing member 4 in the present embodiment includes a sponge material 21.

The sponge material 21 is a spongiform porous structure, and examples thereof include: a so-called sponge itself that is obtained by foaming a rubber or a synthetic resin and that has open cells; and furthermore, a web-like structure obtained by intertwining and integrally connecting animal fibers, plant fibers, synthetic fibers, or the like. Examples of the "porous structure" include not only structures having open cells but also structures having closed cells. The sound absorbing member 4 including such a sponge material 21 has excellent sound absorbing properties and vibration isolating properties.

As the sponge material 21, any of synthetic resin sponges such as ether-based polyurethane sponges, ester-based polyurethane sponges, and polyethylene sponges is suitably used. Alternatively, as the sponge material 21, any of rubber sponges such as chloroprene rubber sponges (CR sponges), ethylene-propylene rubber sponges (EDPM sponges), and nitrile rubber sponges (NBR sponges) is suitably used. In particular, sponges such as polyethylene-based sponges and polyurethane-based sponges including ether-based polyurethane sponges are preferable from the viewpoint of sound absorbing properties, light-weight properties, foaming adjusting capability, durability, and the like.

As shown in FIG. 3, the sound absorbing member 4 in the present embodiment is formed in an annular shape and continuously extends in the tire circumferential direction. As shown in FIG. 2 and FIG. 3, at least a part (in the present example, the entirety) of the sound absorbing member 4 is mounted on the bottom surface 8 of the well 7. The sound absorbing member 4 in the present embodiment is disposed in the tire inner cavity 11 without being in contact with an inner cavity surface 3s of the tire 3.

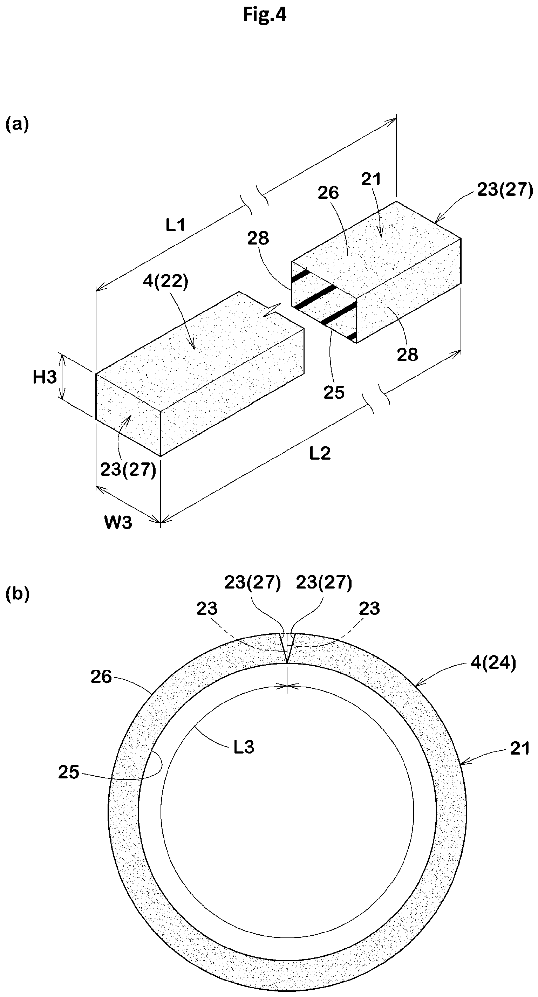

FIG. 4(a) is a perspective view showing a rod-like member 22 according to a not-claimed embodiment. FIG. 4(b) is a side view showing the sound absorbing member 4 in the form of an annular member 24 obtained by curving the rod-like member 22 in FIG. 4(a). In FIG. 4(b), a state where a pair of end portions 23 of the rod-like member 22 are connected to each other is indicated by alternate long and two short dashes lines.

As shown in FIG. 4(a), before the sound absorbing member 4 is mounted on the bottom surface 8 (shown in FIG. 2 and FIG. 3), the sound absorbing member 4 is in the form of the rod-like member 22 having the pair of end portions 23 in the present embodiment. The pair of end portions 23 are provided at both respective ends in the longitudinal direction of the rod-like member 22. Although a rod-like member 22 that is seamless in the longitudinal direction is presented as an example in the present embodiment, no limitation to this mode is made. For example, the rod-like member 22 may have at least one seam as a result of connecting a plurality of minute pieces (not shown) to each other in the longitudinal direction.

As shown in FIG. 4(b), the rod-like member 22 shown in FIG. 4(a) is curved into an annular shape, and the pair of end portions 23 are connected to each other (as indicated by the alternate long and two short dashes lines). Consequently, the annular member 24 shown in FIG. 3 (i.e., the annular sound absorbing member 4) is formed. In this manner, the sound absorbing member 4 in the present embodiment is formed of the rod-like member 22, and thus the amount of offcuts (disposal pieces) to be generated from a sponge base material (not shown) decreases so that manufacturing cost decreases, as compared to a case where a seamless annular sound absorbing member (not shown) is cut out from the sponge base material, for example.

The pair of end portions 23 can be connected to each other as appropriate. In the present embodiment, the pair of end portions 23 are connected to each other by using at least one (not shown) of an adhesive, a pressure-sensitive adhesive, and a double-sided tape. Consequently, the pair of end portions 23 can easily be connected to each other at low cost. In the present embodiment, the pair of end portions 23 are preferably brought into close contact with each other as indicated by the alternate long and two short dashes lines in FIG. 4(b) in order to firmly connect these end portions 23 to each other.

As shown in FIGS. 4(a) and 4(b), the rod-like member 22 (sound absorbing member 4) in the present embodiment has, at positions thereof in the longitudinal direction (tire circumferential direction), cross-sectional shapes that are substantially identical to one another. Although each of the cross-sectional shapes is set to a laterally elongated rectangular shape with the height thereof in the tire radial direction (maximum height H3) being smaller than the width thereof in the tire axial direction (maximum width W3) as shown in FIG. 4(a), the cross-sectional shape is not particularly limited.

The rod-like member 22 in the present embodiment in a state of having not been curved has an inner surface 25, an outer surface 26, and end surfaces 27. The rod-like member 22 further has side surfaces 28.

The inner surface 25 extends in the longitudinal direction and is brought into contact with the bottom surface 8 at the time of mounting on the well 7 shown in FIG. 2 and FIG. 3. The outer surface 26 extends in the longitudinal direction and is formed on an opposite side to the inner surface 25.

The end surfaces 27 in the present embodiment are provided at the pair of end portions 23. The end surfaces 27 in this not-claimed embodiment are perpendicular to the inner surface 25 and the outer surface 26. Consequently, for example, when the rod-like member 22 is cut out from the sponge base material (not shown) during manufacturing of the rod-like member 22, the end surfaces 27 can be formed by performing the cutting in a direction to which the inner surface 25 and the outer surface 26 are perpendicular. Therefore, complicated cutting machining is not necessary for manufacturing the rod-like member 22, and the amount of offcuts (disposal pieces) to be generated from the sponge base material can be decreased so that manufacturing cost decreases.

In the rod-like member 22 in the present embodiment, a length L1 in the longitudinal direction of the outer surface 26 and a length L2 in the longitudinal direction of the inner surface 25 are equal to each other owing to the end surfaces 27 perpendicular to the inner surface 25 and the outer surface 26. If such a rod-like member 22 is curved into an annular shape, the distance (not shown) in the tire circumferential direction between the end surfaces 27 gradually increases toward the outer side in the tire radial direction as shown in FIG. 4(b). Since the rod-like member 22 in the present embodiment is formed of the sponge material 21 which is easily deformable, the pair of end portions 23 can easily be connected to each other (brought into close contact with each other) by stretching or compressing the pair of end portions 23 in the tire circumferential direction.

As shown in FIG. 4(a), the side surfaces 28 extend in the longitudinal direction. The side surfaces 28 in the present embodiment are perpendicular to the inner surface 25 and the outer surface 26. Consequently, for example, when the rod-like member 22 is cut out from the sponge base material (not shown) during manufacturing of the rod-like member 22, the side surfaces 28 can be formed by performing the cutting in a direction to which the inner surface 25 and the outer surface 26 are perpendicular. Therefore, manufacturing cost decreases.

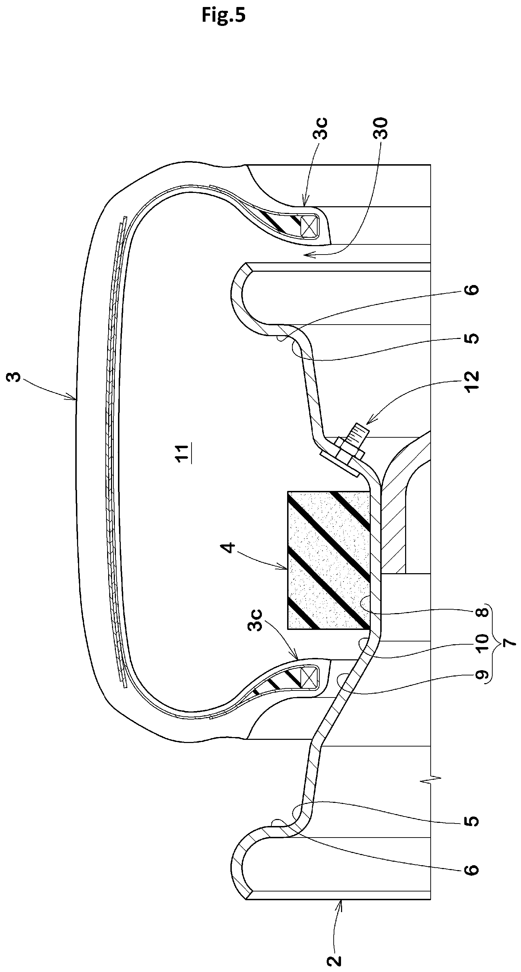

FIG. 5 is a cross-sectional view for explaining a method for mounting the sound absorbing member 4. In the present embodiment, after one bead portion 3c out of the pair of bead portions 3c of the tire 3 is mounted on the rim 2, the sound absorbing member 4 in the form of the annular member 24 shown in FIG. 4(b) is mounted on the bottom surface 8 of the well 7. Then, the other bead portion 3c is mounted on the rim 2, whereby the assembly 1 shown in FIG. 1 and FIG. 2 is formed.

As shown in FIG. 1 and FIG. 2, the sound absorbing member 4 including the sponge material 21 is disposed in the tire inner cavity 11, and thus the assembly 1 according to the present embodiment effectively absorbs sound energy generated in the tire inner cavity 11 during running and suppresses resonant vibrations. Consequently, road noise can be decreased. In addition, since the sound absorbing member 4 includes the sponge material 21 which is easily shrunk, bent, or otherwise deformed, the mounting workability of the sound absorbing member 4 is improved.

The sound absorbing member 4 in the present embodiment is disposed in the tire inner cavity 11 without being in contact with the inner cavity surface 3s of the tire 3, whereby thermal load can be prevented from being applied between the tire 3 and the sound absorbing member 4. Consequently, the durability of the sound absorbing member 4 is improved. Further, the sound absorbing member 4 does not interfere with deformation of the tire 3 during running, and thus decrease in rolling resistance and decrease in tire uniformity can be suppressed.

Since the sound absorbing member 4 in the present embodiment is formed to have a cross-sectional shape which is a laterally elongated rectangular shape, cavity resonance (road noise) in the tire inner cavity 11 can be decreased over a wide range in the tire axial direction. Further, the height (maximum height H3) in the tire radial direction of the sound absorbing member 4 is smaller than the width (maximum width W3) thereof in the tire axial direction. Consequently, the sound absorbing member 4 can be disposed in the tire inner cavity 11 by, for example, inserting the sound absorbing member 4 through a narrow gap 30 between either of the rim flanges 6 and the corresponding bead portion 3c of the tire 3 as shown in FIG. 5. Therefore, the mounting workability of the sound absorbing member 4 is improved. From this viewpoint, the maximum height H3 of the sound absorbing member 4 is preferably set to be 0.6 to 0.9 times the maximum width W3 thereof as shown in FIG. 4(a).

As shown in FIG. 1 and FIG. 2, the sound absorbing member 4 in the present embodiment is adhered to neither the tire 3 nor the rim 2. In the present embodiment, the sound absorbing member 4 is held (positional shift thereof in the tire axial direction is suppressed) at both sides (side surfaces 28) thereof in the tire axial direction by the side surfaces 9 of the well 7.

Since, as described above, the sound absorbing member 4 is not adhered to the tire 3, application of thermal load between the sound absorbing member 4 and the tire 3 and interference with deformation of the tire 3 can be suppressed, the durability of the assembly 1 (sound absorbing member 4) can be improved, and decrease in rolling resistance and decrease in tire uniformity can be suppressed. Further, since the sound absorbing member 4 does not need to be adhered to the rim 2, the mounting workability of the sound absorbing member 4 is improved.

Moreover, the maximum width W3 in the tire axial direction of the sound absorbing member 4 in the present embodiment is set to be not smaller than 0.7 times the maximum width W1 in the tire axial direction of the bottom surface 8 of the well 7 as shown in FIG. 2. Consequently, the sound absorbing member 4 is disposed in the tire inner cavity 11 over a wide range in the tire axial direction, and thus cavity resonance, and hence road noise, in the tire inner cavity 11 is decreased in the assembly 1 according to the present embodiment. Further, the sound absorbing member 4 can be stably mounted on the bottom surface 8. In order to effectively exhibit these advantageous effects, the maximum width W3 of the sound absorbing member 4 is preferably not smaller than 0.75 times and more preferably not smaller than 0.80 times the maximum width W1 of the bottom surface 8 of the well 7.

Meanwhile, if the maximum width W3 of the sound absorbing member 4 is increased more than necessary, the sound absorbing member 4 might come into contact with the air valve 12 provided to the corresponding side surface 9 of the rim 2 so that the sound absorbing member 4 might be unable to be stably mounted. Considering this, the maximum width W3 of the sound absorbing member 4 is preferably set to be not larger than the maximum width W1 of the bottom surface 8. In addition, even if there is little influence of contact between the sound absorbing member 4 and the air valve 12, it might become difficult to mount the sound absorbing member 4 on the bottom surface 8 of the well 7 when the maximum width W3 of the sound absorbing member 4 is larger than necessary. Further, the sound absorbing member 4 and the tire 3 might come into contact with each other during running with the assembly 1, and damage to the sound absorbing member 4 or the like during running might be unable to be sufficiently suppressed. Considering this, the maximum width W3 of the sound absorbing member 4 is preferably set to be not larger than a width that is larger out of a width (not shown) obtained by subtracting 60 mm from the maximum width W2 of the rim 2 and the maximum width W1 of the bottom surface 8. If the maximum width W3 is set to be not larger than the width obtained by subtracting 60 mm from the maximum width W2, decrease in workability during mounting on the rim can be suppressed.

In a state (shown in FIG. 4(b)) where the sound absorbing member 4 has been detached from the bottom surface 8 of the well 7 and is free, an inner circumferential length L3 (the length L2 in the longitudinal direction of the inner surface 25) of the sound absorbing member 4 is preferably set to be 0.8 to 1.2 times an outer circumferential length L4 (not shown) of the bottom surface 8 shown in FIG. 3.

If the inner circumferential length L3 of the sound absorbing member 4 is set to be not smaller than 0.8 times the outer circumferential length L4 (not shown) of the bottom surface 8, it is possible to decrease the elongation of the sound absorbing member 4 (the magnitude of increase in the diameter thereof) necessary for getting over either of the rim flanges 6 during mounting of the sound absorbing member 4 shown in FIG. 5. Consequently, the mounting workability of the sound absorbing member 4 is improved. Further, strain in the tire circumferential direction of the sound absorbing member 4 decreases, whereby damage to the sound absorbing member 4 or the like can be suppressed during running with the assembly 1.

Meanwhile, if the inner circumferential length L3 of the sound absorbing member 4 is set to be not larger than 1.2 times the outer circumferential length L4 (not shown) of the bottom surface 8, the sound absorbing member 4 can be stably held between the side surfaces 9 of the well 7 shown in FIG. 2, and it becomes easy for the sound absorbing member 4 to be mounted on the bottom surface 8 of the well 7. Further, positional shift of the sound absorbing member 4 in the tire axial direction is suppressed during running with the assembly 1. Consequently, damage to the sound absorbing member 4 or the like is suppressed, whereby the durability of the assembly 1 (sound absorbing member 4) is improved. From this viewpoint, the inner circumferential length L3 of the sound absorbing member 4 is preferably not smaller than 0.9 times the outer circumferential length L4 of the bottom surface 8, and meanwhile, preferably not larger than 1.1 times said outer circumferential length L4.

In the cross section of the assembly 1 shown in FIG. 2, the cross-sectional area of the sound absorbing member 4 is preferably set to be not smaller than 5% of the cross-sectional area of the tire inner cavity 11 (excluding the sound absorbing member 4). These cross-sectional areas can be acquired by, for example, performing CT scanning or the like on the tire inner cavity 11 in the standardized state.

If the cross-sectional area of the sound absorbing member 4 is set to be not smaller than 5% of the cross-sectional area of the tire inner cavity 11, a large area of the sound absorbing member 4 is disposed in the tire inner cavity 11, whereby road noise can be decreased. From this viewpoint, the cross-sectional area of the sound absorbing member 4 is preferably not smaller than 10% of the cross-sectional area of the tire inner cavity 11.

Meanwhile, if the cross-sectional area of the sound absorbing member 4 is larger than necessary, the effect of decreasing road noise relative to increase in the cross-sectional area (cost effectiveness) might be unable to be sufficiently obtained. Further, the sound absorbing member 4 significantly moves during running, and this movement might lead to decrease in the durability of the assembly 1 (sound absorbing member 4). From this viewpoint, the cross-sectional area of the sound absorbing member 4 is preferably not larger than 25% and more preferably not larger than 20% of the cross-sectional area of the tire inner cavity 11.

The sound absorbing member 4 preferably has an elongation of 100% to 600%. In the present description, the elongation of the sound absorbing member 4 is measured according to "Part 5: Determination of tensile strength, elongation at break and tear strength" in JIS K 6400-5: 2012.

If the elongation is set to be not lower than 100%, elongation and deformation of the sound absorbing member 4 during mounting on the bottom surface 8 of the well 7 shown in FIG. 5 are allowed, whereby the mounting workability of the sound absorbing member 4 is improved. Meanwhile, if the elongation is set to be not higher than 600%, the sound absorbing member 4 is inhibited from being significantly stretched owing to centrifugal force exerted during running with the assembly 1 shown in FIG. 1. Consequently, positional shift of the sound absorbing member 4 and vibrations due to deformation of the sound absorbing member 4 are suppressed, whereby the durability of the sound absorbing member 4 can be maintained. From this viewpoint, the elongation is preferably not lower than 200%, and meanwhile, preferably not higher than 500%.

The sound absorbing member 4 preferably has a tensile strength of 50 to 300 kPa. In the present description, the tensile strength of the sound absorbing member 4 is measured according to "Part 5: Determination of tensile strength, elongation at break and tear strength" in JIS K 6400-5: 2012.

If the tensile strength is set to be not lower than 50 kPa, stretching or the like of the sound absorbing member 4 due to centrifugal force exerted during running with the assembly 1 shown in FIG. 1 is inhibited, whereby the durability of the sound absorbing member 4 can be maintained. Meanwhile, if the tensile strength is set to be not higher than 300 kPa, elongation and deformation of the sound absorbing member 4 during mounting on the bottom surface 8 of the well 7 shown in FIG. 5 are allowed, whereby the mounting workability of the sound absorbing member 4 is improved. From this viewpoint, the tensile strength is preferably not lower than 100 kPa, and meanwhile, preferably not higher than 200 kPa.

The sound absorbing member 4 preferably has a density of 10 to 40 kg/m³. If the density is set to be not lower than 10 kg/m³, sound energy generated in the tire inner cavity 11 is absorbed, whereby road noise can be decreased. Meanwhile, if the density is set to be not higher than 40 kg/m³, deformation, vibration, and the like of the sound absorbing member 4 during running with the assembly 1 shown in FIG. 1 are absorbed, whereby the durability is improved. From this viewpoint, the density is preferably not lower than 20 kg/m³, and meanwhile, preferably not higher than 30 kg/m³.

The elongation, the tensile strength, and the density of the sound absorbing member 4 can be adjusted as appropriate by, for example, changing the blending amounts of raw materials of the porous material, the temperature for a reaction of the raw materials, the time for the reaction, and the like on the basis of a publicly-known procedure.

### [Tire-Rim Assembly (Second Embodiment)]

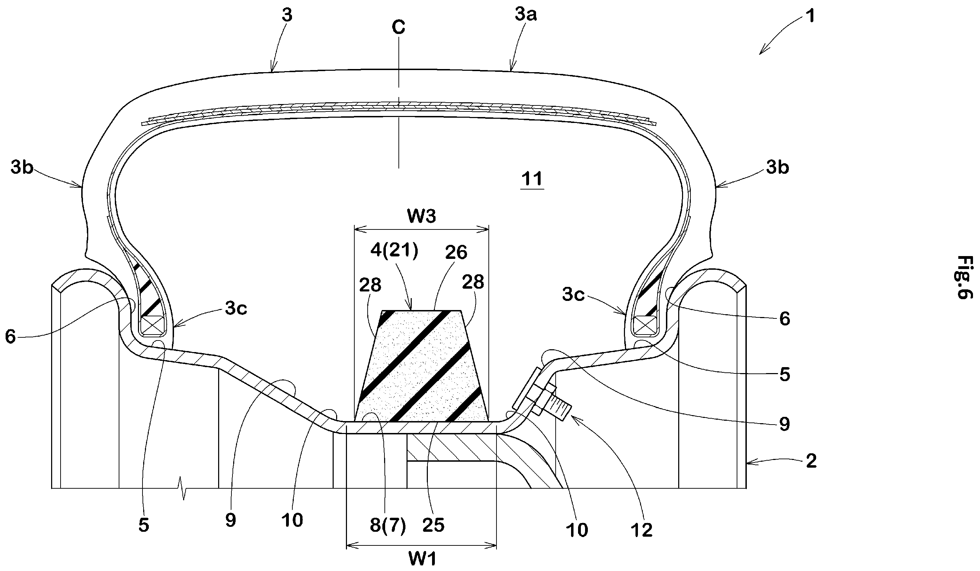

As shown in FIG. 2, the sound absorbing member 4 in the above embodiment is formed to have a cross-sectional shape which is a laterally elongated rectangular shape having a width, in the tire axial direction, that is unchanging from the inner surface 25 toward the outer surface 26. However, no limitation to this mode is made. FIG. 6 is a cross-sectional view of an assembly 1 according to another embodiment of the present invention.

A sound absorbing member 4 in the present embodiment is formed to have a cross-sectional shape which is a trapezoidal shape having a width, in the tire axial direction, that gradually decreases from the inner surface 25 toward the outer surface 26. With such a sound absorbing member 4, the distance in the tire axial direction between each of the side surfaces 28 and the corresponding one of the pair of side surfaces 9 of the rim 2 gradually increases toward the outer side in the tire radial direction, whereby contact between the sound absorbing member 4 and the air valve 12 provided to the corresponding side surface 9 of the rim 2 is inhibited. Consequently, the sound absorbing member 4 can be stably mounted on the bottom surface 8 of the well 7.

### [Tire-Rim Assembly (Third Embodiment)]

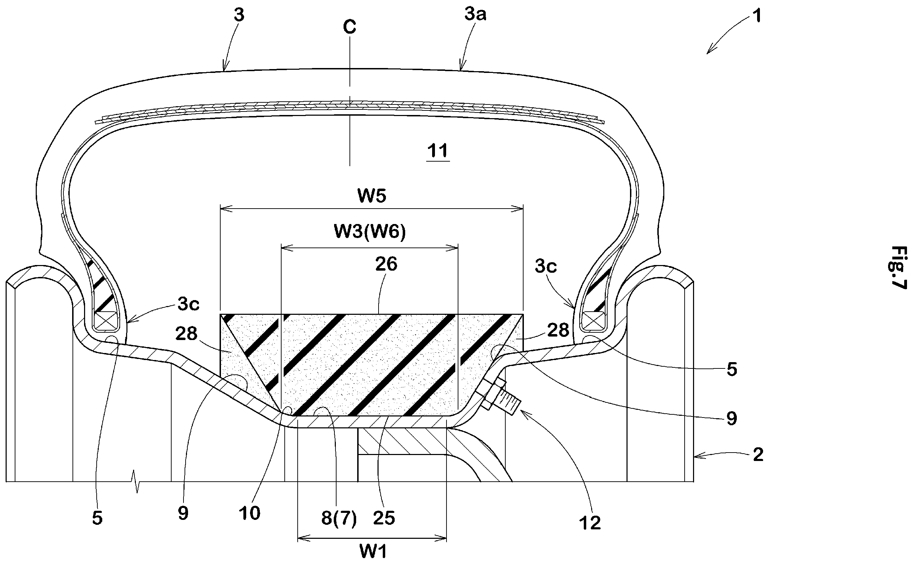

Each of the sound absorbing members 4 in the above embodiments is formed to have a cross-sectional shape which is a laterally elongated rectangular shape (shown in FIG. 2) or a trapezoidal shape (shown in FIG. 6) having a width, in the tire axial direction, that gradually decreases from the inner surface 25 toward the outer surface 26. However, no limitation to this mode is made. FIG. 7 is a cross-sectional view of an assembly 1 according to still another embodiment of the present invention.

A sound absorbing member in the present embodiment is formed to have a cross-sectional shape which is an inverted trapezoidal shape having a width, in the tire axial direction, that gradually increases from the inner surface 25 toward the outer surface 26. With such a sound absorbing member 4, the width thereof in the tire axial direction can be made relatively larger on the tire 3 side (the tire inner cavity 11 side) than on the bottom surface 8 side of the rim 2, whereby cavity resonance, and hence road noise, in the tire inner cavity 11 decreases.

In order to effectively decrease road noise, a width W5 at the outer surface 26 is preferably not smaller than 1.2 times and further preferably not smaller than 1.5 times a width W6 at the inner surface 25. Meanwhile, if the width W5 at the outer surface 26 is large, the effect of decreasing road noise relative to increase in the width W5 (cost effectiveness) might be unable to be sufficiently obtained. Considering this, the width W5 at the outer surface 26 is preferably not larger than 2.0 times and further preferably not larger than 1.8 times the width W6 at the inner surface 25.

In a case where the sound absorbing member 4 is formed to have an inverted trapezoidal shape as in the present embodiment, the maximum width W3 of the sound absorbing member 4 to be identified in relation to the maximum width W1 of the bottom surface 8 of the well 7 is identified at the inner surface 25 in contact with the bottom surface 8 of the well 7. In a case where a recess/projection or the like is formed at the inner surface 25, the maximum width W3 is identified at a portion at which the width in the tire axial direction is maximum, the portion being located between the inner surface 25 and a position that is 10 mm away from the inner surface 25 outward in the tire radial direction.

In the present embodiment, road noise decreases in the same manner as in the above embodiments by setting the maximum width W3 of the sound absorbing member 4 to be not smaller than 0.7 times the maximum width W1 of the bottom surface 8 of the well 7. Further, if the maximum width W3 of the sound absorbing member 4 is set to be not larger than a width that is larger out of the width (not shown) obtained by subtracting 60 mm from the maximum width W2 of the rim 2 and the maximum width W1 of the bottom surface 8, the mounting workability of the sound absorbing member 4 is maintained.

### [Tire-Rim Assembly (Fourth Embodiment)]

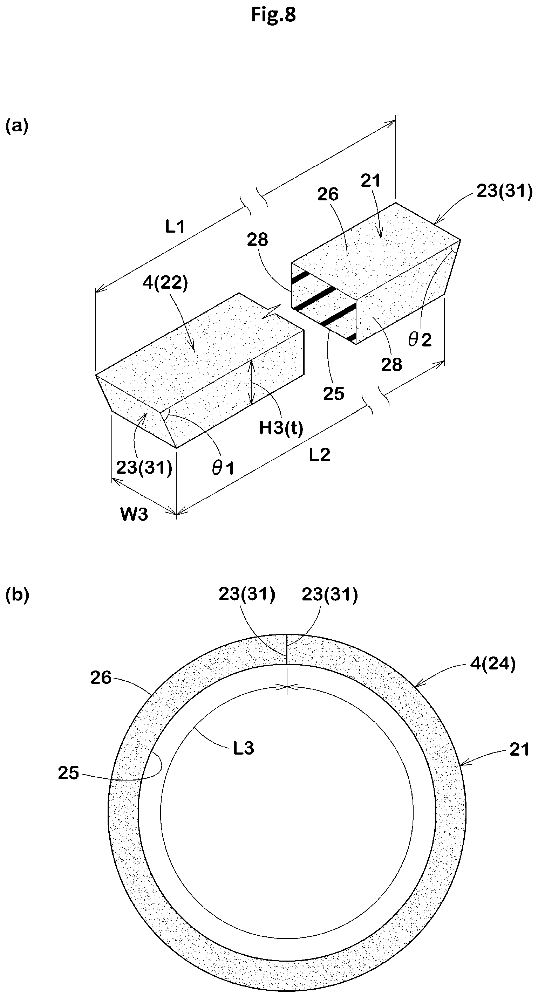

In each of the above embodiments, the rod-like member 22 having the end surfaces 27 perpendicular to the inner surface 25 and the outer surface 26 in a state where the rod-like member 22 has not yet been curved is presented as an example as shown in FIG. 4(a) and included for a better understanding of the invention. However, in the inventive tire-rim assembly, the rod-like member 22 has, instead of the end surfaces 27, tilted surfaces each intersecting with the outer surface 26 at an acute angle. FIG. 8(a) is a perspective view showing a rod-like member 22 according to another embodiment of the present invention. FIG. 8(b) is a side view showing of a sound absorbing member 4 in the form of an annular member 24 obtained by curving the rod-like member 22 in FIG. 8(a).

As shown in FIG. 8(a), the length L1 in the longitudinal direction of the outer surface 26 is larger than the length L2 in the longitudinal direction of the inner surface 25 owing to the tilted surfaces 31 each intersecting with the outer surface 26 at an acute angle in the present embodiment. Consequently, the pair of end portions 23 are easily brought into close contact with each other by curving the rod-like member 22 into an annular shape as shown in FIG. 8(b). Therefore, in the present embodiment, as compared to each of the above embodiments in which the end surfaces 27 shown in FIG. 4(b) are provided, deformation (stretching or compression in the tire circumferential direction) of the end portions 23 can be decreased, and thus distortion of the sound absorbing member 4 decreases, whereby the durability of the sound absorbing member 4 is improved.

In order to further decrease deformation of the end portions 23, a difference d (not shown) between the length L1 in the longitudinal direction of the outer surface 26 and the length L2 in the longitudinal direction of the inner surface 25 preferably satisfies an expression described below. By this satisfaction, when the pair of end portions 23 are connected to each other by curving the rod-like member 22 into an annular shape, the tilted surfaces 31 can be brought into close contact with each other so as to be oriented parallel to the tire radial direction. Therefore, when the pair of end portions 23 are connected to each other, deformation of the end portions 23 is minimized.$d = 2 \times p \times t$ Here, t represents a thickness between the outer surface and the inner surface of the rod-like member.

Angles θ1 and θ2 (shown in FIG. 8(a)) formed by the respective tilted surfaces 31 and the outer surface 26 are preferably set to be equal to each other. Consequently, the tilted surfaces 31 are oriented parallel to the tire radial direction by curving the rod-like member 22 into an annular shape, and thus deformation of the end portions 23 further decreases.

Although the particularly preferred embodiments of the present invention have been described in detail above, the present invention is not limited to the embodiments shown, and various modifications can be made to implement the present invention within the scope of the appended claims.

### EXAMPLES

### [Examples A]

Assemblies each being one shown in FIG. 1 and FIG. 2 were produced as samples (example 1 to example 4 and a comparative example) on the basis of the specifications indicated in Table 1. For each of the sample tires, sound absorption performance (anti-road noise performance), and the mounting workability and the durability of the sound absorbing member, were evaluated. Specifications other than the items indicated in Table 1 are the same among the tires, and the tire size and the like are as follows. In addition, test methods are as described below. The results of the tests are indicated in Table 1.
Tire size: 215/55R17
Rim size: 17×7 J
Internal pressure: 200 kPa
Rim
   Maximum width W2: 202 mm
   Bottom surface of well
      Maximum width W1: 70 mm
      Outer circumferential length L4: 1230 mm
   Maximum width W2 - 60 mm > maximum width W1
Sound absorbing member
   Sponge material: ether-based polyurethane sponge ("E16" manufactured by MARUSUZU Corporation)
   Inner circumferential length L3 of sound absorbing member/outer circumferential length L4 of bottom surface of well: 1.0 times
   Elongation: 300%
   Tensile strength: 150 kPa
   Density: 20 kg/m³

### <Sound Absorption Performance (Anti-Road Noise Performance)>

Assemblies of each type in which the pneumatic tires were each inflated to the above internal pressure were mounted to all the wheels of a vehicle (2000 cc, front wheel drive vehicle), and the vehicle was caused to run on a road-noise measurement road (asphalt rough-surface road) at a speed of 60 km/h. Noise in the vehicle during the running was collected by using a microphone disposed at a position close to the ear on the window side of the driver's seat. Then, a sound pressure level at a peak value of a cavity resonance sound in a narrow band of around 220 Hz was measured. For evaluation, a value by which the sound pressure level decreased from a value obtained with an assembly mounted with no sound absorbing member is indicated. The symbol "-" (minus) means that road noise decreased.

### <Mounting Workability of Sound Absorbing Member>

Sensory evaluation was conducted through a five-score method by an operator regarding easiness of mounting of the sound absorbing member. A larger numerical value indicates a better mounting workability of the sound absorbing member.

### <Durability of Sound Absorbing Member>

Running with each type of assembly in which the pneumatic tire was inflated to the above internal pressure was performed on a drum tester under conditions described below. Presence/absence of damage to the sound absorbing member was checked with the naked eyes each time of running over a distance of 1000 km, and the distance run until damage occurred was measured. A larger numerical value indicates a better durability. The example with the indication of "20000 km" means that no damage to the sound absorbing member occurred at a distance of 20000 km.
Load: 4.6 kN
Running speed: 100 km/h
Drum diameter: 1.7 m

**[Table 1]**

| | Comparative example | Example 1 | Example 2 | Example 3 | Example 4 |
|---|---|---|---|---|---|
| Maximum width W3 of sound absorbing member | 0.6 times maximum width W1 of bottom surface | 0.7 times maximum width W1 of bottom surface | 0.9 times maximum width W1 of bottom surface | Maximum width W2 of rim - 60 mm | Maximum width W2 of rim - 40 mm |
| Sound absorption performance (dB) | -2.0 | -2.5 | -2.5 | -2.5 | -2.5 |
| Mounting workability of sound absorbing member (five-score method) | 5 | 5 | 5 | 4 | 3 |
| Durability of sound absorbing member (km) | 15000 | 18000 | 20000 | 15000 | 10000 |

According to the results of the tests, in each of examples 1 to 4, unlike in the comparative example, the maximum width W3 of the sound absorbing member was set to be not smaller than 0.7 times the maximum width W1 of the bottom surface of the well, whereby the sound pressure level at the peak value of the cavity resonance sound decreased, and road noise decreased. Further, in each of examples 1 to 3, the maximum width W3 of the sound absorbing member was set to be not larger than the width (>the maximum width W1 of the bottom surface of the well) obtained by subtracting 60 mm from the maximum width W2 of the rim, whereby the mounting workability of the sound absorbing member was improved as compared to example 4 in which the maximum width W3 was larger than those in examples 1 to 3.

### [Examples B]

Assemblies each being one shown in FIG. 1 and FIG. 2 were produced as samples (example 2 and examples 5 to 10) on the basis of the specifications indicated in Table 2. For each of the sample tires, sound absorption performance (anti-road noise performance), and the mounting workability and the durability of the sound absorbing member, were evaluated. Specifications other than the items indicated in Table 2 are the same among the tires, and the tire size and the like are the same as those in examples A, except for the following items. In addition, test methods are the same as those for examples A. The results of the tests are indicated in Table 2.
Sound absorbing member
Maximum width W3: 0.9 times the maximum width W1 of the bottom surface
Cross-sectional area of sound absorbing member/cross-sectional area of tire inner cavity: 15%

**[Table 2]**

| | Example 5 | Example 6 | Example 7 | Example 2 | Example 8 | Example 9 | Example 10 |
|---|---|---|---|---|---|---|---|
| Inner circumferential length L3 of sound absorbing member/outer circumferential length L4 of bottom surface | 0.7 | 0.8 | 0.9 | 1.0 | 1.1 | 1.2 | 1.3 |
| Sound absorption performance (dB) | -2.5 | -2.5 | -2.5 | -2.5 | -2.5 | -2.5 | -2.5 |
| Mounting workability of sound absorbing member (five-score method) | 2 | 4 | 5 | 5 | 5 | 4 | 3 |
| Durability of sound absorbing member (km) | 15000 | 20000 | 20000 | 20000 | 20000 | 18000 | 12000 |

According to the results of the tests, in each of example 2 and examples 6 to 9 in which the ratio L3/L4 of the inner circumferential length of the sound absorbing member to the outer circumferential length of the bottom surface was set to fall within the preferable range (0.8 to 1.2 times), the mounting workability and the durability of the sound absorbing member were improved as compared to each of examples 5 and 10 in which the ratio L3/L4 was outside the preferable range.

### [Examples C]

Assemblies each being one shown in FIG. 1 and FIG. 2 were produced as samples (example 2 and examples 11 to 16) on the basis of the specifications indicated in Table 3. For each of the sample tires, sound absorption performance (anti-road noise performance), and the mounting workability and the durability of the sound absorbing member, were evaluated. Specifications other than the items indicated in Table 3 are the same among the tires, and the tire size and the like are the same as those in examples A, except for the following item. In addition, test methods are the same as those for examples A. The results of the tests are indicated in Table 3.
Sound absorbing member
Maximum width W3: 0.9 times the maximum width W1 of the bottom surface

**[Table 3]**

| | Example 2 | Example 11 | Example 12 | Example 13 | Example 14 | Example 15 | Example 16 |
|---|---|---|---|---|---|---|---|
| Cross-sectional area of sound absorbing member/cross-sectional area of tire inner cavity (%) | 15 | 25 | 30 | 15 | 15 | 15 | 15 |
| Elongation of sound absorbing member (%) | 300 | 300 | 300 | 50 | 100 | 600 | 800 |
| Sound absorption performance (dB) | -2.5 | -3.0 | -3.0 | -2.5 | -2.5 | -2.5 | -2.5 |
| Mounting workability of sound absorbing member (five-score method) | 5 | 5 | 5 | 3 | 4 | 5 | 5 |
| Durability of sound absorbing member (km) | 20000 | 20000 | 18000 | 20000 | 20000 | 15000 | 8000 |

According to the results of the tests, in each of examples 2 and 11 in which the ratio of the cross-sectional area of the sound absorbing member to the cross-sectional area of the tire inner cavity was set to fall within the preferable range (5% to 25%), the durability was improved as compared to example 12 in which the ratio was outside the preferable range. Further, in each of examples 2, 14, and 15 in which the elongation of the sound absorbing member was within the preferable range (100% to 600%), the mounting workability and the durability of the sound absorbing member were improved as compared to each of examples 13 and 16 in which the elongation was outside the preferable range.

### [Examples D]

Assemblies each being one shown in FIG. 1 and FIG. 2 were produced as samples (example 2 and examples 17 to 22) on the basis of the specifications indicated in Table 4. For each of the sample tires, sound absorption performance (anti-road noise performance), and the mounting workability and the durability of the sound absorbing member, were evaluated. Specifications other than the items indicated in Table 4 are the same among the tires, and the tire size and the like are the same as those in examples A, except for the following item. In addition, test methods are the same as those for examples A. The results of the tests are indicated in Table 4.
Sound absorbing member
Maximum width W3: 0.9 times the maximum width W1 of the bottom surface

**[Table 4]**

| | Example 17 | Example 18 | Example 2 | Example 19 | Example 20 | Example 21 | Example 22 |
|---|---|---|---|---|---|---|---|
| Tensile strength of sound absorbing member (kPa) | 20 | 50 | 150 | 300 | 500 | 150 | 150 |
| Density of sound absorbing member (kg/m³) | 20 | 20 | 20 | 20 | 20 | 40 | 60 |
| Sound absorption performance (dB) | -2.5 | -2.5 | -2.5 | -2.5 | -2.5 | -2.5 | -2.5 |
| Mounting workability of sound absorbing member (five-score method) | 5 | 5 | 5 | 4 | 3 | 5 | 5 |
| Durability of sound absorbing member (km) | 7000 | 12000 | 20000 | 20000 | 20000 | 15000 | 8000 |

According to the results of the tests, in each of examples 2, 18, and 19 in which the tensile strength of the sound absorbing member was set to fall within the preferable range (50 to 300 kPa), the mounting workability and the durability of the sound absorbing member were improved as compared to each of examples 17 and 20 in which the tensile strength was outside the preferable range. Further, in each of examples 2 and 21 in which the density of the sound absorbing member was within the preferable range (10 to 40 kg/m³), the durability of the sound absorbing member was improved as compared to example 22 in which the density was outside the preferable range.

## Claims

1. A tire-rim assembly (1) comprising:
a rim (2);
a pneumatic tire (3) mounted on the rim (2); and
an annular sound absorbing member (4) disposed in a tire inner cavity (11) enclosed by the rim (2) and the pneumatic tire (3), wherein
the rim (2) includes an annular well (7) recessed inward in a tire radial direction,
the well (7) has an outer circumferential surface, in the tire radial direction, that includes a bottom surface (8) extending to be substantially parallel to a tire axial direction,
the sound absorbing member (4) includes a sponge material (21),
at least a part of the sound absorbing member (4) is mounted on the bottom surface (8) of the well (7), and
a maximum width (W3) in the tire axial direction of the sound absorbing member (4) is not smaller than 0.7 times a maximum width (W1) in the tire axial direction of the bottom surface (8) of the well (7),
**characterized in that**
the sound absorbing member (4) is an annular member (24) obtained by curving a rod-like member (22), which has a pair of end portions (23), into an annular shape and connecting the pair of end portions (23) to each other, and **in that**
the rod-like member (22) in a state of having not been curved has: an inner surface (25) that extends in a longitudinal direction and that is to be brought into contact with the bottom surface (8); an outer surface (26) that extends in the longitudinal direction and that is present on an opposite side to the inner surface (25); and tilted end surfaces (31) each intersecting with the outer surface (26) at an acute angle.

2. The tire-rim assembly (1) according to claim 1, wherein the maximum width (W3) of the sound absorbing member (4) is not larger than a width that is larger out of a width obtained by subtracting 60 mm from a maximum width (W2) in the tire axial direction of the rim (2) and the maximum width (W1) of the bottom surface (8).

3. The tire-rim assembly (1) according to claim 1 or 2, wherein, in a state where the sound absorbing member (4) has been detached from the bottom surface (8) and is free, an inner circumferential length (L3) of the sound absorbing member (4) is 0.8 to 1.2 times an outer circumferential length (L4) of the bottom surface (8).

4. The tire-rim assembly (1) according to one of claims 1 to 3, wherein the sound absorbing member (4) is adhered to neither the pneumatic tire (3) nor the rim (2).

5. The tire-rim assembly (1) according to one of claims 1 to 4, wherein, in a cross section of the tire-rim assembly (1), a cross-sectional area of the sound absorbing member (4) is 5% to 25% of a cross-sectional area of the tire inner cavity (11).

6. The tire-rim assembly (1) according to one of claims 1 to 5, wherein the sound absorbing member (4) has an elongation of 100% to 600%, the elongation being measured according to "Part 5: Determination of tensile strength, elongation at break and tear strength" in JIS K 6400-5:2012.

7. The tire-rim assembly (1) according to one of claims 1 to 6, wherein the sound absorbing member (4) has a tensile strength of 50 to 300 kPa, the tensile strength being measured according to "Part 5: Determination of tensile strength, elongation at break and tear strength" in JIS K 6400-5:2012.

8. The tire-rim assembly (1) according to one of claims 1 to 7, wherein the sound absorbing member (4) has a density of 10 to 40 kg/m³.

9. The tire-rim assembly (1) according to one of claims 1 to 8, wherein the pair of end portions (23) are connected to each other by using at least one of an adhesive, a pressure-sensitive adhesive, and a double-sided tape.

10. The tire-rim assembly (1) according to one of claims 1 to 9, wherein a difference d between a length (L1) in the longitudinal direction of the outer surface (26) and a length (L2) in the longitudinal direction of the inner surface (25) satisfies the following expression,$d = 2 \times p \times t$ where t represents a thickness between the outer surface (26) and the inner surface (25) of the rod-like member (22).

## Patentansprüche

1. Reifen-Felgen-Anordnung (1), umfassend:
eine Felge (2);
einen Luftreifen (3), der auf die Felge (2) aufgezogen ist; und
ein ringförmiges schallabsorbierendes Element (4), das in einem Reifeninnenhohlraum (11) angeordnet ist, der durch die Felge (2) und den Luftreifen (3) eingeschlossen ist, wobei
die Felge (2) ein ringförmiges Tiefbett (7) umfasst, das in einer Reifenradialrichtung nach innen vertieft ist,
das Tiefbett (7) eine Außenumfangsfläche in der Reifenradialrichtung aufweist, die eine Bodenfläche (8) umfasst, die sich so erstreckt, dass sie im Wesentlichen parallel zu einer Reifenaxialrichtung ist,
das schallabsorbierende Element (4) ein Schwammmaterial (21) umfasst,
mindestens ein Teil des schallabsorbierenden Elements (4) auf der Bodenfläche (8) des Tiefbetts (7) montiert ist, und
eine maximale Breite (W3) in der Reifenaxialrichtung des schallabsorbierenden Elements (4) nicht kleiner als das 0.7-Fache einer maximalen Breite (W1) in der Reifenaxialrichtung der Bodenfläche (8) des Tiefbetts (7) ist,
**dadurch gekennzeichnet, dass**
das schallabsorbierende Element (4) ein ringförmiges Element (24) ist, das durch Biegen eines stangenartigen Elements (22), das ein Paar Endabschnitte (23) aufweist, in eine ringförmige Form und Verbinden des Paars Endabschnitte (23) miteinander erhalten wird, und dass
das stangenartige Element (22) in einem Zustand, in dem es nicht gebogen worden ist, aufweist: eine innere Oberfläche (25), die sich in einer Längsrichtung erstreckt und in Kontakt mit der Bodenfläche (8) zu bringen ist; eine äußere Oberfläche (26), die sich in der Längsrichtung erstreckt und auf einer der inneren Oberfläche (25) gegenüberliegenden Seite vorhanden ist; und geneigte Endflächen (31), die jeweils die äußere Oberfläche (26) unter einem spitzen Winkel schneiden.

2. Reifen-Felgen-Anordnung (1) nach Anspruch 1, wobei die maximale Breite (W3) des schallabsorbierenden Elements (4) nicht größer als eine Breite ist, die die größere ist aus einer Breite, die durch Subtrahieren von 60 mm von einer maximalen Breite (W2) der Felge (2) in der Reifenaxialrichtung erhalten wird, und der maximalen Breite (W1) der Bodenfläche (8).

3. Reifen-Felgen-Anordnung (1) nach Anspruch 1 oder 2, wobei in einem Zustand, in dem das schallabsorbierende Element (4) von der Bodenfläche (8) abgelöst worden und frei ist, eine Innenumfangslänge (L3) des schallabsorbierenden Elements (4) das 0.8- bis 1.2-Fache einer Außenumfangslänge (L4) der Bodenfläche (8) beträgt.

4. Reifen-Felgen-Anordnung (1) nach einem der Ansprüche 1 bis 3, wobei das schallabsorbierende Element (4) weder an dem Luftreifen (3) noch an der Felge (2) anhaftet.

5. Reifen-Felgen-Anordnung (1) nach einem der Ansprüche 1 bis 4, wobei in einem Querschnitt der Reifen-Felgen-Anordnung (1) eine Querschnittsfläche des schallabsorbierenden Elements (4) 5% bis 25% einer Querschnittsfläche des Reifeninnenhohlraums (11) beträgt.

6. Reifen-Felgen-Anordnung (1) nach einem der Ansprüche 1 bis 5, wobei das schallabsorbierende Element (4) eine Dehnung von 100 % bis 600 % aufweist, wobei die Dehnung gemäß "Part 5: Determination of tensile strength, elongation at break and tear strength" in JIS K 6400-5:2012 gemessen ist.

7. Reifen-Felgen-Anordnung (1) nach einem der Ansprüche 1 bis 6, wobei das schallabsorbierende Element (4) eine Zugfestigkeit von 50 kPa bis 300 kPa aufweist, wobei die Zugfestigkeit gemäß "Part 5: Determination of tensile strength, elongation at break and tear strength" in JIS K 6400-5:2012 gemessen ist.

8. Reifen-Felgen-Anordnung (1) nach einem der Ansprüche 1 bis 7, wobei das schallabsorbierende Element (4) eine Dichte von 10 bis 40 kg/m³ aufweist.

9. Reifen-Felgen-Anordnung (1) nach einem der Ansprüche 1 bis 8, wobei das Paar Endabschnitte (23) unter Verwendung von mindestens einem aus einem Klebstoff, einem Haftklebstoff und einem doppelseitigen Klebeband miteinander verbunden ist.

10. Reifen-Felgen-Anordnung (1) nach einem der Ansprüche 1 bis 9, wobei eine Differenz d zwischen einer Länge (L1) in der Längsrichtung der äußeren Oberfläche (26) und einer Länge (L2) in der Längsrichtung der inneren Oberfläche (25) den folgenden Ausdruck erfüllt,$d = 2 \times p \times t$ wobei t eine Dicke zwischen der äußeren Oberfläche (26) und der inneren Oberfläche (25) des stangenartigen Elements (22) darstellt.

## Revendications

1. Ensemble pneumatique-jante (1) comprenant :
une jante (2) ;
un bandage pneumatique (3) monté sur la jante (2) ; et
un élément annulaire d'absorption sonore (4) disposé dans une cavité intérieure du pneumatique (11) entourée par la jante (2) et le bandage pneumatique (3), dans lequel
la jante (2) inclut un puits annulaire (7) évidé vers l'intérieur dans une direction radiale du pneumatique,
le puits (7) a une surface circonférentielle extérieure, dans la direction radiale du pneumatique, qui inclut une surface de fond (8) s'étendant de façon à être sensiblement parallèle à une direction axiale du pneumatique,
l'élément d'absorption sonore (4) inclut un matériau en éponge (21),
au moins une partie de l'élément d'absorption sonore (4) est montée sur la surface de fond (9) du puits (7), et
une largeur maximum (W3) dans la direction axiale du pneumatique de l'élément d'absorption sonore (4) n'est pas inférieure à 0,7 fois une largeur maximum (W1) dans la direction axiale du pneumatique de la surface de fond (8) du puits (7),
**caractérisé en ce que**
l'élément d'absorption sonore (4) est un élément annulaire (24) obtenu en courbant un élément de type tige (22), qui a une paire de portions d'extrémité (23), dans une forme annulaire et en connectant la paire de portions d'extrémité (23) l'une à l'autre, et **en ce que**
l'élément de type tige (22) dans un état non incurvé présente : une surface intérieure (25) qui s'étend dans une direction longitudinale et qui doit être amenée en contact avec la surface de fond (8) ; une surface extérieure (26) qui s'étend dans la direction longitudinale et qui est présente sur un côté opposé à la surface intérieure (25) ; et des surfaces d'extrémité inclinées (31) recoupant chacune la surface extérieure (26) sous un angle aigu.

2. Ensemble pneumatique-jante (1) selon la revendication 1, dans lequel la largeur maximum (W3) de l'élément d'absorption sonore (4) n'est pas supérieure à une largeur qui est la plus grande parmi une largeur obtenue en retranchant 60 mm d'une largeur maximum (W2) dans la direction axiale du pneumatique de la jante (2) et la largeur maximum (W1) de la surface de fond (8).

3. Ensemble pneumatique-jante (1) selon la revendication 1 ou 2, dans lequel, dans un état dans lequel l'élément d'absorption sonore (4) a été détaché de la surface de fond (8) et est libre, une longueur circonférentielle intérieure (L3) de l'élément d'absorption sonore (4) est de 0,8 à 1,2 fois une longueur circonférentielle extérieure (L4) de la surface de fond (8).

4. Ensemble pneumatique-jante (1) selon l'une des revendications 1 à 3, dans lequel l'élément d'absorption sonore (4) n'adhère ni au bandage pneumatique (3), ni à la jante (2).

5. Ensemble pneumatique-jante (1) selon l'une des revendications 1 à 4, dans lequel, dans une section transversale de l'ensemble pneumatique-jante (1), une aire en section transversale de l'élément d'absorption sonore (4) est de 5 % à 25 % d'une aire en section transversale de la cavité intérieure du pneumatique (11).

6. Ensemble pneumatique-jante (1) selon l'une des revendications 1 à 5, dans lequel l'élément d'absorption sonore (4) a un allongement de 100 % à 600 %, l'allongement étant mesuré selon « Part 5: Determination of tensile strength, elongation at break and tear strength » (*Section 5 : Détermination de la résistance à la traction, de l'allongement à la rupture et de la résistance au déchirement*) dans la norme industrielle japonaise JIS K 6400-5:2012.

7. Ensemble pneumatique-jante (1) selon l'une des revendications 1 à 6, dans lequel l'élément d'absorption sonore (4) a une résistance à la traction de 50 à 300 kPa, la résistance à la traction étant mesurée selon « Part 5: Determination of tensile strength, elongation at break and tear strength » (*Section 5 : Détermination de la résistance à la traction, de l'allongement à la rupture et de la résistance au déchirement*) dans la norme industrielle japonaise JIS K 6400-5:2012.

8. Ensemble pneumatique-jante (1) selon l'une des revendications 1 à 7, dans lequel l'élément d'absorption sonore (4) a une densité de 10 à 40 kg/m³.

9. Ensemble pneumatique-jante (1) selon l'une des revendications 1 à 8, dans lequel la paire de portions d'extrémité (23) sont connectées l'une à l'autre à l'aide d'au moins un élément parmi un adhésif, un adhésif sensible à la pression, et un ruban double face.

10. Ensemble pneumatique-jante (1) selon l'une des revendications 1 à 9, dans lequel une différence d entre une longueur (L1) dans la direction longitudinale de la surface extérieure (26) et une longueur (L2) dans la direction longitudinale de la surface intérieure (25) satisfait à l'expression suivante$d = 2 \times p \times t$ où t représente une épaisseur entre la surface extérieure (26) et la surface intérieure (25) de l'élément de type tige (22).
